# FASCICULE DE BREVET EUROPEEN

(11) **EP 3 973 157 B1**
(45) Date de publication et mention de la délivrance du brevet: **14.06.2023**
(21) Numéro de dépôt: 20737257.4
(22) Date de dépôt: 20.05.2020
(51) Int. Cl.: F02C 7/14, F01D 17/14, F01D 25/12, F02C 7/18, B64D 13/08

(54) **RÉGULATEUR POREUX À VENTILATION INTÉGRÉE**
PORÖSER REGLER MIT INTEGRIERTER VENTILATION
POROUS REGULATOR WITH INTEGRATED VENTILATION

(30) Priorité: 21.05.2019 FR 1905314
(43) Date de publication de la demande: 30.03.2022
(73) Titulaire: Liebherr-Aerospace Toulouse SAS, 31200 Toulouse (FR)
(72) Inventeur: MAURY, Damien, 31016 TOULOUSE Cedex 2 (FR); LOSSOUARN, David, 31016 TOULOUSE Cedex 2 (FR); MANCHO, Jean-Luc, 31016 TOULOUSE Cedex 2 (FR); BREGOLI, Mickael, 31016 TOULOUSE Cedex 2 (FR); ANGELIQUE, Romain, 31016 TOULOUSE Cedex 2 (FR)
(74) Mandataire: Bringer IP
(86) Numéro de dépôt international: PCT/FR2020/050840
(87) Numéro de publication internationale: WO 2020/234544

(56) Documents cités:
- EP-A1- 3 045 709
- CN-U- 206 309 979
- FR-A1- 2 990 492
- US-A1- 2017 030 265

## Description

### Domaine technique de l'invention

L'invention concerne un régulateur. En particulier, l'invention concerne un régulateur permettant le traitement d'un air chaud porteur d'une puissance pneumatique, par exemple pour permettre le déclenchement d'un actionneur pneumatique. Un tel régulateur peut être utilisé dans un aéronef, notamment pour réguler l'air fourni à l'actionneur pneumatique d'une vanne de l'aéronef, notamment une vanne d'un système de prélèvement d'air ou de conditionnement d'air.

### Arrière-plan technologique

Le régulateur permet le traitement d'un air chaud porteur de puissance pneumatique par différents éléments de traitement. Un te1 régulateur peut être aussi connu sous le terme « servocommande ».

Lorsque le régulateur est utilisé dans un environnement thermique sévère tel qu'un aéronef, il est soumis à des contraintes thermiques fortes qui nécessitent un traitement particulier. En particulier, les régulateurs comprennent des éléments particulièrement sensibles à la température, tels que des solénoïdes permettant la gestion du flux d'air de sortie du régulateur, des membranes de régulation de pression, etc. On entend plus généralement par éléments sensibles à la température, des éléments pouvant notamment être détériorés en présence d'une température élevée, ou ayant des performances réduites en présence d'une température élevée.

Les solutions actuelles pour protéger ces éléments sensibles sont par exemple :
- Déport des éléments sensibles dans un zone protégée : cette solution nécessite néanmoins l'ajout de conduites pour communiquer l'information de pression, ce qui a un impact fort sur le coût et complexifie l'installation ;
- Ajout d'une ventilation de la zone, soit globale sur toute la zone, soit dirigée vers les éléments sensibles : cette solution a une efficacité limitée sur les éléments sensibles car elle n'est pas suffisamment spécifique à ces éléments.

D'autres régulateurs selon l'art antérieur sont connus de US 2017/030265 A1 et EP 3 045 709 A1.

Les inventeurs ont cherché une solution pour éviter de déporter les éléments sensibles et améliorer la ventilation des éléments sensibles du régulateur.

### Objectifs de l'invention

L'invention vise ainsi à fournir un régulateur bénéficiant d'un refroidissement amélioré.

L'invention vise en particulier à fournir un régulateur permettant la régulation d'une vanne, permettant ainsi de former une vanne compacte sans nécessiter de déporter des éléments sensibles à la température dans des zones protégées.

L'invention vise également à fournir un régulateur particulièrement adapté pour être utilisé dans un aéronef.

### Exposé de l'invention

Pour ce faire, l'invention concerne un régulateur selon la revendication 1, le régulateur étant configuré pour recevoir un flux d'air chaud porteur de puissance pneumatique via une entrée d'air, pour traiter cet air chaud et pour transmettre l'air chaud traité vers une sortie d'air configurée pour alimenter un actionneur pneumatique, comprenant au moins un élément électrique ou mécanique sensible à la température, et un corps de régulateur, où le corps de régulateur est composé d'une enceinte creuse conductrice de chaleur formant une cavité entourant au moins en partie un conduit permettant le transport du flux d'air chaud, ladite cavité comprenant une entrée d'air de refroidissement et ,le régulateur étant caractérisé en ce que la cavité est remplie au moins en partie d'un maillage métallique de renforcement structurel permettant la circulation de l'air de refroidissement provenant de l'entrée d'air de refroidissement jusqu'à une sortie d'air de refroidissement, et en ce que l'élément électrique et/ou mécanique sensible à la température est agencé dans la cavité ou au contact de l'enceinte creuse du corps de régulateur de sorte à être refroidi par l'air de refroidissement par conduction thermique.

Un régulateur selon l'invention permet ainsi un refroidissement de l'air chaud circulant dans au moins un des canaux de celui-ci afin de réduire les risques de dégradations physiques ou de dégradations des performances d'éléments sensibles à la température du régulateur.

Le corps de régulateur porte les éléments du régulateur en assurant ainsi en partie sa résistance structurelle. Celui-ci est généralement plein dans l'art antérieur. Utiliser un maillage métallique à l'intérieur du corps de régulateur permet de maintenir la résistance structurelle du corps tout en permettant le passage de l'air de refroidissement à l'intérieur de celui-ci. L'air de refroidissement permet un refroidissement par convection.

Le maillage métallique peut occuper tout ou partie de l'espace formé par la cavité. Les parties nécessitant une résistance structurelle peuvent être renforcée par ajout du maillage métallique, d'autres parties moins critiques pouvant être laissée vides de façon à ce que l'air de refroidissement circule, et d'autres parties très critiques peuvent rester pleines, du moment que de l'air de refroidissement puisse circuler dans le corps de régulateur.

Avantageusement et selon l'invention, le maillage métallique est fabriqué par fabrication additive.

La fabrication additive du maillage métallique permet de former un maillage métallique de la forme désirée permettant de répondre au mieux aux contraintes structurelles et aux contraintes de passage de l'air de refroidissement.

Avantageusement et selon l'invention, la sortie d'air de refroidissement est disposée sur le corps de régulateur à l'opposé de l'entrée d'air de refroidissement, de sorte à ce que l'air de refroidissement traverse la cavité du corps de régulateur.

Selon cette variante de l'invention, l'air de refroidissement traverse un volume important de la cavité du corps de régulateur de sorte à maximiser le refroidissement des canaux et du ou des éléments électrique ou mécanique sensible à la température, en étant en contact avec une plus grande partie de l'enceinte creuse conductrice de chaleur.

Avantageusement et selon l'invention chaque élément mécanique et/ou électrique sensible à la température est choisi parmi un des éléments de la liste suivante :
- une membrane,
- une membrane d'un dispositif de détente de l'air chaud porteur de puissance pneumatique,
- un solénoïde,
- un moteur couple.

La membrane est par exemple une membrane de clapet ou une membrane d'un dispositif de détente et permet par exemple la comparaison d'une pression du flux d'air chaud avec une pression de référence. Plus généralement, la membrane peut être toute membrane permettant la comparaison de deux pressions exercées de part et d'autre d'elle-même.

Le solénoïde permet notamment la gestion du flux d'air en sortie du régulateur, par l'ouverture ou la fermeture d'un clapet permettant la sortie de la quantité d'air nécessaire à l'activation de l'actionneur pneumatique au moment souhaité.

D'autres composants électromécaniques, électriques ou électroniques peuvent aussi former les éléments sensibles à la température.

Avantageusement et selon l'invention l'air de refroidissement est un air d'écoulement prélevé dans une turbomachine.

Selon cet aspect de l'invention, l'air d'écoulement de la turbomachine (aussi appelé *fan air* en anglais) forme un air de refroidissement particulièrement avantageuse dans un aéronef car c'est la source d'air parmi les plus froides disponible dans l'aéronef.

L'air d'écoulement est un air mis en mouvement par la turbomachine. Lorsque la turbomachine est un turboréacteur, l'air d'écoulement utilisé et l'air d'écoulement formant le flux secondaire mis en mouvement par la soufflante du turboréacteur.

L'air d'écoulement est en outre pressurisé en sortie de turbomachine ce qui permet la ventilation du corps de régulateur sans nécessiter de dispositif particulier pour mettre l'air d'écoulement en mouvement.

L'invention concerne également une vanne actionnée par un actionneur pneumatique, caractérisée en ce qu'elle comprend un régulateur selon l'invention configuré pour alimenter ledit actionneur pneumatique.

En équipant une vanne d'un régulateur selon l'invention, on peut former une vanne compacte dans laquelle tous les éléments de la vanne sont disposés à proximité les uns les autres, sans nécessité de déporter une partie des éléments de la vanne, notamment les éléments du régulateur sensibles à la température.

La vanne peut par exemple être utilisé dans un système de prélèvement ou de conditionnement d'air d'un aéronef.

L'invention concerne également un aéronef comprenant au moins une turbomachine, caractérisé en ce qu'il comprend un régulateur selon l'invention, et des canaux permettant de conduire un air d'écoulement de la turbomachine vers l'entrée d'air de refroidissement du régulateur, l'air d'écoulement de la turbomachine formant ainsi l'air de refroidissement du régulateur.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en coupe d'un régulateur selon un mode de réalisation de l'invention.
[Fig. 2] est une vue schématique en coupe d'un corps de régulateur selon un mode de réalisation de l'invention.
[Fig.3] est une vue schématique simplifiée d'un système de conditionnement d'air selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

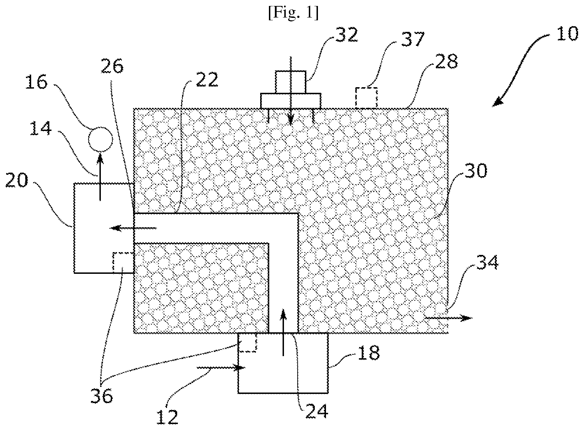

La figure 1 illustre schématiquement en coupe un régulateur 10 selon un mode de réalisation de l'invention.

Le régulateur 10 est configuré pour recevoir un flux d'air chaud porteur de puissance pneumatique via une entrée 12 d'air, pour traiter cet air chaud et pour transmettre l'air chaud traité vers une sortie 14 d'air configurée pour alimenter un actionneur 16 pneumatique.

L'entrée 12 d'air du régulateur se trouve au niveau d'une première interface 18 mécanique et la sortie 14 d'air se trouve au niveau d'une deuxième interface 20 mécanique. La première et la deuxième interface mécanique sont par exemple des dispositifs de traitement de l'air tel qu'un dispositif de détente, un clapet de contrôle de débit, etc. Ces interfaces mécaniques comprennent des éléments 36 mécaniques ou électriques sensibles à la température tel qu'une membrane du dispositif de détente, ou un solénoïde permettant l'activation du clapet.

Des éléments 37 mécaniques ou électriques sensibles à la température peuvent aussi être disposés sur le corps de régulateur.

Le flux air chaud traversant la première interface 18 mécanique entre dans un conduit 22 par une entrée 24 de conduit et en ressort par une sortie 26 de conduit pour atteindre la deuxième interface 20 mécanique.

Selon d'autres modes de réalisation, le régulateur peut comprendre davantage de conduits reliant entre eux au moins trois interfaces mécaniques.

Dans l'art antérieur, un tel conduit serait soit à l'air libre, soit entouré d'un corps de régulateur plein formant une enceinte pleine autour du conduit.

Dans ce mode de réalisation de l'invention, le régulateur comprend un corps de régulateur composé d'une enceinte 28 creuse formant une cavité 30 entourant au moins en partie, ici dans sa totalité, le conduit 22.

Le corps de régulateur comprend une entrée 32 d'air de refroidissement et une sortie 34 d'air de refroidissement permettant la circulation d'air de refroidissement à l'intérieur de la cavité 30. L'entrée 32 d'air de refroidissement est par exemple un mamelon sur lequel peut être branché un conduit amenant de l'air de refroidissement au régulateur. La sortie 34 d'air de refroidissement peut par exemple être reliée à l'air ambiant.

L'utilisation d'une cavité totalement creuse engendrerait des risques structurels pour le régulateur, le corps de régulateur ayant une fonction de maintien dans l'art antérieur. Ainsi, dans ce mode de réalisation de l'invention, la cavité est remplie au moins en partie, ici en totalité, d'un maillage métallique fabriqué par fabrication additive permettant la circulation de l'air de refroidissement tout en garantissant sa résistance structurelle.

Le maillage métallique est un bon compromis entre un corps de régulateur plein qui ne permettrait pas le passage d'air de refroidissement et un corps de régulateur vide qui ne garantit pas une résistance structurelle au corps de régulateur. Pour permettre des renforcements structurels spécifiques à des endroits critiques, le régulateur 10 peut aussi comprendre, dans d'autres modes de réalisation, des parties pleines du moment qu'elles n'empêchent pas la circulation de l'air de refroidissement entre l'entrée 32 d'air de refroidissement et la sortie 34 d'air de refroidissement.

La circulation de l'air de refroidissement au travers du maillage métallique permet de refroidir l'air chaud circulant dans le conduit 22.

En outre, le maillage métallique et l'enceinte 28 creuse sont conducteurs de chaleur, ce qui permet de refroidir, par conduction thermique, les éléments 36, 37 sensibles à la température, par exemple situés dans les interfaces mécaniques qui sont reliées directement ou thermiquement au maillage métallique via le conduit 22 et/ou l'enceinte 28 creuse, l'entrée 24 de conduit, la sortie 26 de conduit, etc.

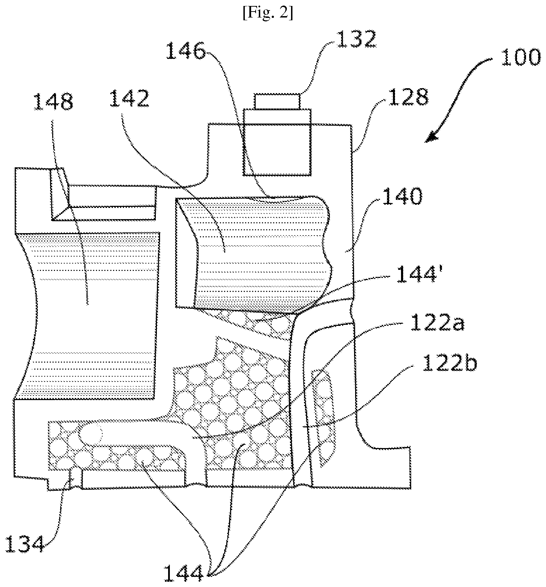

La figure 2 représente schématiquement en coupe un corps 100 de régulateur selon un deuxième mode de réalisation de l'invention.

Le corps 100 de régulateur comprend une enceinte creuse formant une cavité entourant deux conduits, un premier conduit 122a et un deuxième conduit 122b.

Le corps de régulateur comprend des parties 140 formant le pourtour de l'enceinte et pouvant servir à renforcer la structure à des points sensibles. La cavité est formée de parties creuses, notamment un évidement 142 totalement creux, et de maillage 144 métallique et d'une partie 144' transitoire remplie de maillage métallique en lien direct avec l'évidement 142 et le maillage 144 métallique.

L'air de refroidissement entre par une entrée 132 d'air de refroidissement formé par un mamelon, entre dans l'évidement 142 par un orifice 146, parvient à la partie 144 transitoire et circule dans le maillage 144 métallique. L'air de refroidissement sort du corps 100 de régulateur par une sortie 134 d'air de refroidissement.

Le corps de régulateur peut être conformé pour s'adapter aux interfaces mécaniques du régulateur, par exemple il peut comprendre un emplacement 148 dans lequel peut être agencé le dispositif de détente du régulateur.

Le maillage métallique est représenté sur les figures 1 et 2 par une multitude de cercles accolés à des fins illustratives, mais peut prendre des formes différentes.

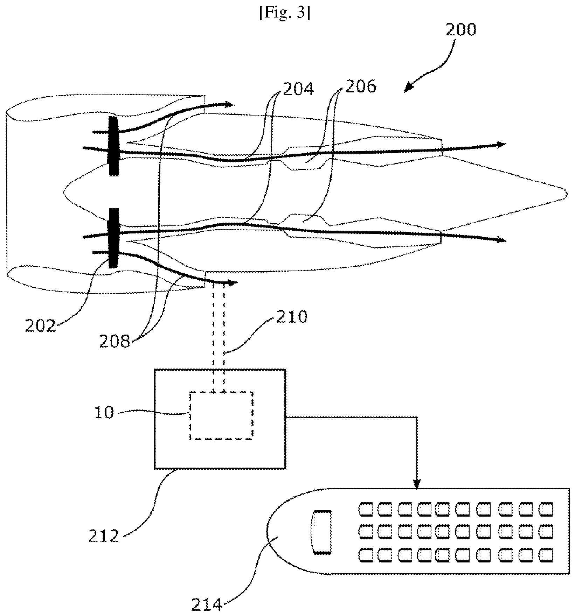

La figure 3 représente schématiquement et de façon simplifiée un système de conditionnement d'air selon un mode de réalisation de l'invention, installé dans un aéronef et comprenant un régulateur selon un des modes de réalisation décrit ci-dessus.

L'aéronef comprend une turbomachine, en particulier un turboréacteur 200, représenté de façon simplifié, comprenant une soufflante 202 permettant la formation de deux flux d'air, un flux 204 d'air primaire destiné à être compressé puis injecté dans une chambre 206 de combustion, et un flux 208 d'air secondaire circulant autour de la partie du turboréacteur 200 traitant le flux 204 d'air primaire.

Ce flux d'air secondaire, froid car provenant de l'air extérieur entrant dans le turboréacteur et ayant une pression dynamique générée par la soufflante 202, forme un air d'écoulement, aussi appelé *fan air* en anglais car mis en mouvement par la soufflante (*fan* en anglais), qui est prélevé via un conduit 210 conduisant vers le régulateur 10. L'air d'écoulement ainsi prélevé peut être conduit jusqu'à l'entrée d'air de refroidissement et permet de refroidir et ventiler la cavité du corps de régulateur et ainsi les éléments sensibles à la température, tel que la membrane du dispositif de détente, le solénoïde et/ou tout éléments électrique ou mécanique sensible à la température souhaitée.

Le régulateur 10 est avantageusement intégré dans un système 212 de traitement d'air destiné par exemple à conditionner l'air de la cabine 214 de l'aéronef. Le régulateur 10 peut par exemple pour contrôler un actionneur pneumatique permettant d'assurer une régulation de pression.

## Revendications

1. Régulateur, configuré pour recevoir un flux d'air chaud porteur de puissance pneumatique via une entrée (12) d'air, pour traiter cet air chaud et pour transmettre l'air chaud traité vers une sortie (14) d'air configurée pour alimenter un actionneur (16) pneumatique, comprenant au moins un élément (36, 37) électrique et/ou mécanique sensible à la température, et un corps (100) de régulateur, le corps (100) de régulateur étant composé d'une enceinte (28) creuse conductrice de chaleur formant une cavité (30) entourant au moins en partie un conduit (22, 122a, 122b) permettant le transport du flux d'air chaud, ladite cavité comprenant une entrée d'air de refroidissement;
le régulateur étant **caractérisé en ce que** la cavité est remplie au moins en partie d'un maillage (144, 144') métallique de renforcement structurel permettant la circulation de l'air de refroidissement provenant de l'entrée (32, 132) d'air de refroidissement jusqu'à une sortie (34, 134) d'air de refroidissement, et **en ce que** l'élément (36, 37) électrique et/ou mécanique sensible à la température est agencé dans la cavité ou au contact de l'enceinte creuse du corps de régulateur de sorte à être refroidi par l'air de refroidissement par conduction thermique.

2. Régulateur selon la revendication 1, **caractérisé en ce que** le maillage métallique est fabriqué par fabrication additive.

3. Régulateur selon l'une des revendications 1 ou 2, **caractérisé en ce que** la sortie (14) d'air de refroidissement est disposée sur le corps de régulateur à l'opposé de l'entrée (12) d'air de refroidissement, de sorte à ce que l'air de refroidissement traverse la cavité (30) du corps de régulateur.

4. Régulateur selon l'une des revendications 1 à 3, **caractérisé en ce que** chaque élément (36, 37) électrique et/ou mécanique sensible à la température est choisi parmi un des éléments de la liste suivante :
- une membrane,
- une membrane d'un dispositif de détente de l'air chaud porteur de puissance pneumatique,
- un solénoïde,
- un moteur couple.

5. Régulateur selon l'une des revendications 1 à 4, **caractérisé en ce que** l'air de refroidissement est un air d'écoulement prélevé dans une turbomachine (200).

6. Vanne actionnée par un actionneur (16) pneumatique, **caractérisée en ce qu'**elle comprend un régulateur (10) selon l'une des revendications 1 à 5 configuré pour alimenter ledit actionneur (16) pneumatique.

7. Aéronef comprenant au moins une turbomachine (200), **caractérisé en ce qu'**il comprend un régulateur (10) selon l'une des revendications 1 à 5, et des canaux permettant de conduire un air d'écoulement de la turbomachine vers l'entrée (12) d'air de refroidissement du régulateur, l'air d'écoulement de la turbomachine (200) formant ainsi l'air de refroidissement du régulateur (10).

## Patentansprüche

1. Regler, der ausgestaltet ist, über einen Lufteinlass (12) einen Heißluftstrom zu empfangen, der pneumatische Energie transportiert, um die Heißluft zu behandeln und die behandelte Heißluft zu einem Luftauslass (14) zu übertragen, welcher ausgestaltet ist, ein pneumatisches Betätigungselement (16) zu versorgen, das mindestens ein temperaturempfindliches elektrisches und/oder mechanisches Element (36, 37) und einen Reglerkörper (100) umfasst,
der Reglerkörper (100) aus einem hohlen, wärmeleitenden Gehäuse (28) besteht, das einen Hohlraum (30) ausbildet, der zumindest teilweise eine Leitung (22, 122a, 122b) für den Transport des Heißluftstroms umgibt, worin der Hohlraum einen Kühllufteinlass aufweist, der Regler **dadurch gekennzeichnet ist, dass** der Hohlraum zumindest teilweise mit einem strukturellen Verstärkungsmetallnetz (144, 144') gefüllt ist, das es der Kühlluft ermöglicht, vom Kühllufteinlass (32, 132) zu einem Kühlluftauslass (34, 134) zu zirkulieren, und darin dass das temperaturempfindliche elektrische und/oder mechanische Element (36, 37) in dem Hohlraum oder in Kontakt mit dem hohlen Gehäuse des Reglerkörpers angeordnet ist, um von der Kühlluft durch thermische Konduktion gekühlt zu werden.

2. Regler nach Anspruch 1, **dadurch gekennzeichnet, dass** das Metallgitter durch additive Fertigung hergestellt ist.

3. Regler nach Anspruch 1 oder Anspruch 2, **dadurch gekennzeichnet, dass** der Kühlluftauslass (14) am Reglerkörper dem Kühllufteinlass (12) abgewandt angeordnet ist, so dass die Kühlluft durch den Hohlraum (30) des Reglerkörpers strömt.

4. Regler nach einem der Ansprüche 1 bis 3, **dadurch gekennzeichnet, dass** jedes temperaturempfindliche elektrische und/oder mechanische Element (36, 37) ausgewählt ist, aus der Liste bestehend aus:
- einer Membran,
- einer Membrane einer Heißluft-Expansionsvorrichtung, die pneumatische Energie überträgt,
- einer Magnetspule, und
- einem Drehmomentmotor.

5. Regler nach einem der Ansprüche 1 bis 4, **dadurch gekennzeichnet, dass** die Kühlluft eine von einer Turbomaschine (200) entnommene Strömungsluft ist.

6. Ventil, das durch ein pneumatisches Betätigungselement (16) betätigt wird, **dadurch gekennzeichnet, dass** das Ventil einen Regler (10) nach einem der Ansprüche 1 bis 5 umfasst, der ausgestaltet ist, zur Versorgung des pneumatischen Betätigungselements (16).

7. Flugzeug mit mindestens einer Turbomaschine (200), **dadurch gekennzeichnet, dass** das Luftfahrzeug einen Regler (10) nach einem der Ansprüche 1 bis 5 und Kanäle zum Leiten des Luftstroms der Turbomaschine zum Kühllufteinlass (12) umfasst, wobei der Luftstrom der Turbomaschine (200) so die Kühlluft des Reglers (10) bildet.

## Claims

1. Regulator, configured to receive a hot air flow carrying pneumatic power via an air inlet (12), to treat this hot air and to transmit the treated hot air to an air outlet (14) configured to supply a pneumatic actuator (16), comprising at least one temperature-sensitive electrical and/or mechanical element (36, 37), and a regulator body (100),
the regulator body (100) is composed of a heat-conducting hollow enclosure (28) forming a cavity (30) at least partially surrounding a duct (22, 122a, 122b) for transporting the hot air flow, said cavity comprising a cooling air inlet, the regulator being **characterized in that** the cavity is at least partially filled with a structural reinforcing metal mesh (144, 144') that allows the cooling air to circulate from the cooling air inlet (32, 132) to a cooling air outlet (34, 134), and **in that** the temperature-sensitive electrical and/or mechanical element (36, 37) is arranged in the cavity or in contact with the hollow enclosure of the regulator body so as to be cooled by the cooling air by thermal conduction.

2. Regulator according to claim 1, **characterized in that** the metal mesh is produced by additive manufacturing.

3. Regulator according to either claim 1 or claim 2, **characterized in that** the cooling air outlet (14) is arranged on the regulator body opposite the cooling air inlet (12), so that the cooling air passes through the cavity (30) of the regulator body.

4. Regulator according to any of claims 1 to 3, **characterized in that** each temperature-sensitive electrical and/or mechanical element (36, 37) is selected from the following list of elements:
- a membrane,
- a membrane of a hot air expansion device carrying pneumatic power,
- a solenoid,
- a torque motor.

5. Regulator according to any of claims 1 to 4, **characterized in that** the cooling air is flow air drawn from a turbomachine (200).

6. Valve actuated by a pneumatic actuator (16), **characterized in that** said valve comprises a regulator (10) according to any of claims 1 to 5 configured to supply said pneumatic actuator (16).

7. Aircraft comprising at least one turbomachine (200), **characterized in that** said aircraft comprises a regulator (10) according to any of claims 1 to 5, and channels for conducting flow air from the turbomachine to the cooling air inlet (12), the flow air from the turbomachine (200) thus forming the cooling air of the regulator (10).
